# EUROPÄISCHE PATENTSCHRIFT

(11) **EP 4 462 082 B1**
(45) Veröffentlichungstag und Bekanntmachung des Hinweises auf die Patenterteilung: **08.07.2026**
(21) Anmeldenummer: 24170576.3
(22) Anmeldetag: 16.04.2024
(51) Int. Cl.: G01D 4/00, G01F 15/00

(54) **VORRICHTUNG, INSBESONDERE MESSEINRICHTUNG ZUR ERFASSUNG EINER VERBRAUCHSGRÖSSE, MIT EINER ANTENNE**
DEVICE, IN PARTICULAR MEASURING DEVICE FOR DETECTING A CONSUMPTION QUANTITY, COMPRISING AN ANTENNA
DISPOSITIF, EN PARTICULIER DISPOSITIF DE MESURE POUR LA DÉTECTION D'UNE GRANDEUR DE CONSOMMATION, DOTÉ D'UNE ANTENNE

(30) Priorität: 12.05.2023 DE 102023112588
(43) Veröffentlichungstag der Anmeldung: 13.11.2024
(73) Patentinhaber: Diehl Metering Systems GmbH, 90451 Nürnberg (DE); Diehl Metering S.A.S., 68304 Saint Louis (FR)
(72) Erfinder: Schröter, Simon, 91052 Erlangen (DE); Togni, Jean-Bruno, 68720 Saint-Bernard (FR); Sigl, Michael, 90587 Tuchenbach (DE)
(74) Vertreter: Diehl Patentabteilung

(56) Entgegenhaltungen:
- EP-A1- 3 591 347
- US-A1- 2021 278 266
- US-A1- 2023 012 764

## Beschreibung

Die Erfindung betrifft eine Vorrichtung, insbesondere eine Messeinrichtung zur Erfassung einer Verbrauchsgröße, mit einem Gehäuse, einer innerhalb des Gehäuses angeordneten Leiterplatte, einer Kommunikationseinrichtung und einer an oder auf der Leiterplatte angeordneten Antenne, wobei die Kommunikationseinrichtung dazu eingerichtet ist, über die Antenne mit einer vorgegebenen Trägerfrequenz Daten zwischen der Vorrichtung und einer externen Einrichtung zu übertragen, wobei innerhalb des Gehäuses ein Dielektrikum mit einer veränderlichen Permittivität bezüglich der Trägerfrequenz angeordnet ist.

Die Elektronik von Messeinrichtungen zur Erfassung einer Verbrauchsgröße, beispielsweise von Wasser-, Strom- und Wärmezählern, muss häufig vor Umwelteinflüssen und insbesondere vor Feuchtigkeit geschützt werden. Eine Möglichkeit hierfür ist es, die Elektronik zu vergießen beziehungsweise das Gehäuse durch Vergussmasse zu verschließen. Dies erschwert jedoch die Wartung der Messeinrichtung.

Beispielsweise aus der Druckschrift EP 3 550 272 B1 ist es bekannt, in entsprechenden Messeinrichtungen zum Feuchtigkeitsschutz ein Trocknungsmittel zu nutzen, dass in das Gehäuse eindringende Feuchtigkeit aufnehmen kann. Hierdurch kann es möglich sein, auf ein Vergießen der Elektronik beziehungsweise des Gehäuses zu verzichten.

Aus der US 2021/0278266 A1 ist eine Vorrichtung zur Erfassung von Verbrauchsgrößen bekannt, bei der ein Aufnahmeraum innerhalb der Vorrichtung vorgesehen ist, welche ein Trocknungsmittel vorsieht.

Die US 2023/0012764 A1 beschreibt einen Ultraschallwasserzähler, welcher im Bereich der Antenne einen Aufnahmeraum für ein Trocknungsmittel vorsieht.

Aus der EP 3 591 347 A1 ist ein Ultraschallzähler bekannt, der eine innerhalb des Gehäuses angeordnete Leiterplatte, eine Antenne und ebenso ein Trocknungsmittel vorsieht.

Es wurde jedoch im Rahmen von Versuchen erkannt, dass eine Nutzung von Trocknungsmittel in einer Messeinrichtung zwar bei einer Nutzung von relativ hohen Trägerfrequenzen von beispielsweise 868 MHz im UHF Band für eine Kommunikation mit der Messeinrichtung unproblematisch ist. Bei einer Nutzung von niedrigeren Trägerfrequenzen, beispielsweise bei 169 MHz im VHF Band, kann die Nutzung eines Trocknungsmittels im Gehäuse jedoch dazu führen, dass die Kommunikationsreichweite über die Betriebszeit hinweg sinkt und/oder dass nach einer gewissen Betriebszeit ein höherer Energieverbrauch der Kommunikationseinrichtung resultiert.

Der Erfindung liegt somit die Aufgabe zugrunde, die obig genannten Nachteile bei der Nutzung eines Trocknungsmittel in einer mit einer Kommunikationseinrichtung versehenen Vorrichtung, die insbesondere bei einer Nutzung von eher niederfrequenten Trägerfrequenzen zur Kommunikation auftreten, zu vermeiden.

Die Aufgabe wird durch eine Vorrichtung der eingangs genannten Art gelöst, wobei einerseits die Leiterplatte und/oder ein metallisches oder metallumfassendes Schirmmittel zwischen dem Dielektrikum und der Antenne angeordnet ist und wobei andererseits der minimale Abstand der Antenne von dem Dielektrikum wenigstens 30% oder wenigstens 50% des maximalen Durchmessers des Innenraums des Gehäuses ist.

Im Rahmen der Erfindung wurde erkannt, dass durch das Vorhandensein eines Dielektrikums im Nahfeld der zur Kommunikation genutzten Antenne die Eigenschaften der Antenne, beispielsweise deren Impedanz und Resonanzfrequenz, beeinflusst werden können. Während ein vorhandenes Dielektrikum mit konstanter oder zumindest näherungsweise konstanter Permittivität bezüglich der Trägerfrequenz bei der Auslegung der Kommunikationseinrichtung beziehungsweise der Antenne berücksichtigt werden kann, sodass eine optimale Sendeamplitude beziehungsweise Effizienz erreicht werden kann, ist dies bei einer Permittivität des Dielektrikums, die sich mit der Zeit deutlich ändert, nicht möglich.

Die Permittivität wird auch als Dielektrizitätskonstante bezeichnet. Bei Trocknungsmitteln kann sich die Permittivität durch Aufnahme von Wasser stark ändern. Im trockenen Zustand weisen übliche Trocknungsmittel eine relative Dielektrizitätskonstante zwischen 3 und 10 auf. Wasser weist eine relative Dielektrizitätskonstante von ungefähr 80 auf. Bei einer Sättigung üblicher Trocknungsmittel resultiert typischerweise ein Wassergehalt von ca. 20 %. Somit führt die Wasseraufnahme zu einer Erhöhung der Dielektrizitätskonstante beziehungsweise der Permittivität um ca. 150 % der Permittivität im trockenen Zustand. Dies führt in der Regel zu einer deutlichen Verstimmung der Resonanzfrequenz der Antenne und somit, je nach Bandbreite der Antenne, häufig zu einer deutlich niedrigeren Reichweite beziehungsweise Effizienz.

Ist die Vorrichtung beispielsweise ein Smart-Meter Verbrauchszähler, so ist der für die Antenne zur Verfügung stehende Bauraum in der Regel eher gering. Hierdurch kann die maximal nutzbare Bauhöhe der Antenne beispielsweise auf 5 cm oder sogar auf 3 cm begrenzt sein. Daher handelt es sich bei den einsetzbaren Antennen im UHF und VHF Band um elektrisch kleine Antennen. Bei hohen Trägerfrequenzen von beispielsweise 868 MHz beziehungsweise im UHF Band weisen geeignete Antennen häufig noch eine relativ große Bandbreite auf, sodass dort der Einfluss einer Permittivitätsänderung des Dielektrikums auf die Reichweite beziehungsweise die Effizienz geringer ist als bei niedrigeren Sendefrequenzen, also beispielsweise bei der Sendefrequenzen von 169 MHz beziehungsweise im VHF Band. Daher wird die genannte Problematik im eingangs zitierten Stand der Technik anscheinend auch nicht berücksichtigt.

Während das beschriebene Problem für Trocknungsmittel besonders ausgeprägt ist, kann es auch für andere Stoffe, insbesondere für Kunststoffe, relevant sein, deren Permittivität beispielsweise durch Hitze, Alterung, UV-Licht oder Ähnliches über die Betriebszeit der Vorrichtung veränderlich sein kann.

Erfindungsgemäß wird dieses Problem vermieden beziehungsweise verringert, indem durch eine Abschirmung durch die Leiterplatte beziehungsweise das Schirmmittel und durch hinreichende Beabstandung der Einfluss des Dielektrikums mit der veränderlichen Permittivität auf die Eigenschaften der Antenne minimiert wird.

Ergänzend zur beschrieben Beabstandung und Abschirmung der Antenne von dem Dielektrikum kann der Einfluss des Dielektrikums auf die Antenneneigenschaften auch durch Wahl einer geeigneten Antennengeometrie verringert werden. Die Antennengeometrie wird hierbei vorzugsweise derart gewählt, dass eine durch den Betrieb der Antenne resultierende elektrische Feldstärke im Bereich des Dielektrikums möglichst gering ist. Eine geeignete Antennengeometrie kann beispielsweise durch eine computerimplementierte Simulation und Optimierung der Feldverteilung der Antenne erreicht werden.

Unter einer Anordnung der Antenne auf der Leiterplatte kann verstanden werden, dass die Antenne durch eine auf der Leiterplatte vorhandene Leiterbahnstruktur gebildet ist.

Eine an der Leiterplatte angeordnete Antenne kann hingegen beispielsweise durch ein separates, an der Leiterplatte angebrachtes und durch deren Leiterbahnen kontaktiertes Bauteil ausgebildet sein.

Unter einer Anordnung der Leiterplatte beziehungsweise des Schirmmittel zwischen Antenne und Dielektrikum kann insbesondere verstanden werden, dass alle Verbindungsgeraden, die einen beliebigen Punkt des Dielektrikums mit einem beliebigen Punkt der Antenne verbinden, die Leiterplatte und/oder das Schirmmittel kreuzen.

Die genannten Abstände zwischen Antenne und Dielektrikum können beispielsweise erreicht werden, indem die Antenne und das Dielektrikum an gegenüberliegenden Randbereichen der Leiterplatte angeordnet werden. Insbesondere kann der Abstand zwischen Antenne und Dielektrikum somit wenigstens 30% oder wenigstens 50% des maximalen Abstandes zwischen Rändern der Leiterplatte sein.

Wird als Vorrichtung eine Messeinrichtung genutzt, kann diese insbesondere einen Verbraucher von Wasser, Gas, Elektrizität und/oder Wärme erfassen. Insbesondere kann die Vorrichtung ein Smartmeter sein.

Das Dielektrikum kann unmittelbar oder zumindest nahe an der Leiterplatte angeordnet sein. Beispielsweise kann das Dielektrikum in einem Behältnis aufgenommen sein, dass durch die Leiterplatte getragen wird. Alternativ ist es auch möglich, das Dielektrikum von der Leiterplatte beabstandet anzuordnen und beispielsweise an dem Gehäuse zu haltern.

Eine Abschirmung über die Leiterplatte basiert je nachdem, ob es sich bei der Antenne um eine Monopolantenne oder eine Dipolantenne handelt, auf geringfügig unterschiedlichen Effekten. Im Falle einer Monopolantenne wird das elektrische Feld zwischen dem am weitesten von der Leiterplatte beabstandeten Punkt der Antenne und der Leiterplatte aufgebaut, sodass das stärkste elektrische Feld entlang des kürzesten Verbindungspfades zwischen dem leiterplattenabgewandten Ende der Antenne und der Leiterplatte resultiert. Durch Anordnung des Dielektrikums auf der Rückseite der Leiterplatte wirkt diese somit als Abschirmung gegenüber diesem Bereich der stärksten Feldstärke. Wird hingegen eine Dipolantenne genutzt, so bildet die Leiterplatte selbst nicht unmittelbar einen Teil der Antenne und kann insbesondere als Fläche mit Neutralpotenzial wirken und hierdurch die Abschirmung erreichen.

Wie bereits obig erläutert wurde, kann das Dielektrikum insbesondere ein Trocknungsmittel sein. Durch Nutzung eines Trocknungsmittels im Gehäuse kann insbesondere eine Schädigung der Elektronik der Vorrichtung durch Feuchtigkeit vermieden werden, ohne dass ein Verguss der Elektronik beziehungsweise des Gehäuses erforderlich ist. Das Trocknungsmittel kann beispielsweise Silicagel oder ein Molekularsieb sein. Wie bereits obig detailliert erläutert wurde, ändert sich die Permittivität üblicher Trocknungsmittel mit zunehmender Wasseraufnahme deutlich, sodass das erfindungsgemäße Vorgehen bei einer Nutzung eines Trocknungsmittels im Gehäuse besonders vorteilhaft ist.

Das Dielektrikum kann derart ausgebildet sein, dass sich die Permittivität des Dielektrikums bezüglich der Trägerfrequenz über ein vorgegebenes Betriebszeitintervall der Vorrichtung, insbesondere aufgrund einer Alterung des Dielektrikums, und/oder bis zu einer Sättigung des Dielektrikums mit Wasser, insbesondere aufgrund einer Adsorption und/oder einer chemischen Bindung von Wasser, um wenigstens 50% ändert. Je stärkere Änderungen der Permittivität erwartbar sind, desto relevanter ist die erfindungsgemäß vorgesehene Abschirmung beziehungsweise Beabstandung der Antenne von dem Dielektrikum.

Ergänzend oder alternativ zur reinen Alterung und/oder Wasseraufnahme des Dielektrikums über das Betriebszeitintervall kann eine Änderung der Permittivität auch aufgrund von Hitze und/oder durch andere chemische Prozesse außer einer Wasserbindung und/oder durch UV-Licht resultieren. Die genannte Größe der Permittivitätsänderung kann außer für Trocknungsmittel beispielsweise auch für Kunststoffe, beispielsweise für Gehäusekomponenten und/oder Dichtmaterialien, resultieren.

Als Betriebszeitintervall kann beispielsweise ein Zeitintervall bis zum erforderlichen Austausch beziehungsweise einer erforderlichen Wartung der Vorrichtung, beispielsweise wegen des Erreichens einer erwarteten Lebensdauer eines Energiespeichers der Vorrichtung und/oder einer Gültigkeitsdauer einer Kalibration oder Eichung einer Messeinrichtung, betrachtet werden. Betriebszeitintervalle von Verbrauchszählern werden typischerweise durch herstellerseitige Angabe oder durch einschlägige Vorschriften vorgegeben.

Alternativ kann als vorgegebenes Betriebszeitintervall beispielsweise ein Zeitintervall von einem Jahr oder von zwei Jahren oder von fünf Jahren oder von zehn Jahren betrachtet werden.

Das Dielektrikum kann wenigstens 2 mm oder wenigstens 10 mm von Kanten der Leiterplatte entfernt angeordnet sein. Im Bereich von Kanten einer eine Antenne tragenden Leiterplatte resultieren typischerweise lokale Maxima der durch die Antenne verursachten Feldstärke, womit eine Beabstandung des Dielektrikums von diesen Kanten vorteilhaft ist. Die Beabstandung des Dielektrikums von Kanten der Leiterplatte ist besonders dann relevant, wenn das Dielektrikum an der von der Antenne abgewandten Rückseite der Leiterplatte angeordnet ist.

Die Antenne kann auf der Leiterplatte zwischen einer ersten Kante der Leiterplatte und einer der ersten Kante gegenüberliegenden zweiten Kante der Leiterplatte und näher an der ersten Kante als an der zweiten Kante angeordnet sein, wobei das Dielektrikum näher an der zweiten Kante als an der ersten Kante angeordnet ist. Die durch den Betrieb der Antenne verursachte Feldstärke an der jeweiligen Kante verringert sich mit dem Abstand der Antenne zur Kante. Daher ist es besonders relevant, das Dielektrikum von jener Kante zu beabstanden, die sich besonders nahe an der Antenne befindet.

Zwischen dem Dielektrikum und wenigstens einer Kante der Leiterplatte kann eine metallische oder metallumfassende Komponente der Vorrichtung angeordnet sein. Hierdurch kann eine Wechselwirkung mit dem durch den Betrieb der Antenne verursachten elektromagnetischen Feld an der jeweiligen Kante und somit der Einfluss der Eigenschaften des Dielektrikums auf die Antenneneigenschaften merklich reduziert werden. Insbesondere kann die metallische oder metallumfassende Komponente zwischen dem Dielektrikum und der zum Dielektrikum nächstliegenden Kante der Leiterplatte angeordnet sein. Ergänzend oder alternativ kann das Dielektrikum zwischen zwei gegenüberliegenden Kanten der Leiterplatte angeordnet sein und es kann eine jeweilige metallische oder metallumfassende Komponente der Vorrichtung zwischen dem Dielektrikum unter der jeweiligen Kante angeordnet sein.

Das Schirmmittel und/oder die metallische oder metallumfassende Komponente kann eine elektrische Komponente der Vorrichtung sein, die insbesondere zum Betrieb der Kommunikationseinrichtung beziehungsweise der Antenne und/oder zur Messdatenerfassung dient. Solche elektrische Komponenten sind häufig gut zur Feldabschirmung geeignet, sodass durch die genannte Anordnung erreicht werden kann, dass eine elektrische Komponente neben ihrer ohnehin erforderlichen Funktion in einer elektrischen Schaltung zusätzlich dazu genutzt wird, den Einfluss des Dielektrikums auf die Antenneneigenschaften zu reduzieren.

Das Schirmmittel und/oder die metallische oder metallumfassende Komponente kann insbesondere ein Energiespeicher sein, der zur Bereitstellung von Energie für die Kommunikationseinrichtung und/oder für wenigstens eine zur Messdatenerfassung dienende Komponente dient. Energiespeicher können relativ großbauende Komponenten sein und weisen häufig metallische oder metallumfassende Gehäuse auf, die insbesondere auf einem definierten Potenzial liegen können, sodass sie zur Abschirmung von Feldern besonders gut geeignet sind. Beispielsweise kann der Energiespeicher eine zylinderförmige oder näherungsweise rechteckige Batterie beziehungsweise ein entsprechend geformter Akkumulator oder Kondensator sein.

Das Schirmmittel und/oder die metallische oder metallumfassende Komponente kann ein Drahtgeflecht und/oder ein, insbesondere perforiertes, Blech und/oder metallische Fäden und/oder Partikel in einem Matrixmaterial und/oder ein metallbeschichtetes Trägermaterial sein oder umfassen. Das Schirmmittel beziehungsweise die Komponente kann insbesondere wasserdurchlässig sein, insbesondere wenn durch es beziehungsweise sie ein als das Dielektrikum genutztes Trocknungsmittel umgriffen wird. Um die Wasserdurchlässigkeit zu erreichen, kann ein genutztes Blech Öffnungen aufweisen, die beispielsweise durch ein Bohren, Prägen, Ätzen, Laserschneiden oder Ähnliches in das Blech eingebracht sind. Als Matrixmaterial beziehungsweise beschichtets Material kann insbesondere Kunststoff verwendet werden. Eine metallische Beschichtung kann beispielsweise durch Gasphasenabscheidung oder als metallische Folie aufgebracht werden.

Das Schirmmittel und/oder die metallische oder metallumfassende Komponente können jeweils wahlweise als starre oder flexibel biegbare Komponente ausgebildet sein. Das Schirmmittel beziehungsweise die Komponente können beispielsweise als Gefäß für das Trocknungsmittel, beispielsweise als flexibler Beutel, ausgebildet sein. Ein solcher Beutel kann prinzipiell in üblicher Weise hergestellt werden, wobei statt einem üblichen Kunststoffmaterial beispielsweise ein Metallpartikel oder Metallfäden tragendes Matrixmaterial genutzt werden kann und/oder ein Drahtgeflecht als Hülle oder Teil der Hülle des Beutels genutzt werden kann. Eine solche Hülle kann zunächst als Endlosschlauch hergestellt und anschließend geschnitten und nach Befüllung mit dem Trocknungsmittel an seine Enden verschweißt werden.

Das Dielektrikum, insbesondere das Trocknungsmittel, kann als zusammenhängender Festkörper oder auch als Granulat vorliegen. Ein solches Granulat kann beispielsweise in einem Kunststoffbehälter oder einem Beutel aufgenommen sein, jedoch ergänzend oder alternativ auch durch das Schirmmittel beziehungsweise die metallische oder metallumfassende Komponente aufgenommen sein.

Das Dielektrikum kann vollständig durch das Schirmmittel und/oder die metallische oder metallumfassende Komponente und/oder die Leiterplatte eingeschlossen sein, insbesondere in einem hierdurch gebildeten quaderförmigen Käfig. Alternativ können auch nur einige der sechs Seitenwände eines solchen Käfigs vorhanden bzw. abschirmend sein, nämlich nur wenigstens eine oder wenigstens zwei oder wenigstens drei oder wenigstens vier oder wenigstens fünf der Seitenwände. Die verbleibenden Seiten des Quaders können zum Gehäuseinnenraum offen sein oder durch nicht beziehungsweise wenig abschirmende Materialien, beispielsweise durch Kunststoff, gebildet sein.

Allgemein kann das Dielektrikum innerhalb eines quaderförmigen Aufnahmevolumens angeordnet sein, wobei das Schirmmittel und/oder die Leiterplatte und/oder die metallische oder metallumfassende Komponente das quaderförmige Aufnahmevolumen an wenigstens zwei oder wenigstens drei oder wenigstens vier oder wenigstens fünf oder sechs seiner Seitenflächen begrenzen. Verbleibende Seitenflächen können jeweils offen sein oder durch isolierendes Material, beispielsweise Kunststoff, gebildet sein. Zumindest Teile der Seitenflächen des Aufnahmevolumens können Wasserdurchlässig sein, wobei eine wasserdurchlässige Seitenfläche beispielsweise durch ein Drahtgeflecht oder durch ein perforiertes Material, insbesondere durch ein perforiertes Blech, gebildet werden kann.

Das Gehäuse kann eine Ausnehmung aufweisen, wobei ein durch eine Innenfläche des Gehäuses gebildeter Boden der Ausnehmung weiter von der Leiterplatte beabstandet ist als ein durch die Innenfläche des Gehäuses gebildeter Rand der Ausnehmung, wobei das Dielektrikum in der Ausnehmung aufgenommen ist. Durch eine solche Ausnehmung kann der Abstand des Dielektrikums zu der Antenne beziehungsweise der Leiterplatte weiter erhöht werden. Ergänzend oder alternativ kann durch eine solche Ausnehmung eine Halterung des Dielektrikums, insbesondere bei Nutzung eines Granulats als Dielektrikum beziehungsweise Trocknungsmittel, erreicht werden.

Einerseits kann die Ausnehmung oder andererseits kann eine weitere der Seitenflächen des Aufnahmevolumens in einer Schließstellung eins Verschlussmittels durch das Verschlussmittel verschlossen sein, wobei das Verschlussmittel bezüglich der Ausnehmung oder des Aufnahmevolumens aus der Schließstellung in eine Offenstellung bewegbar, insbesondere verschwenkbar, ist, um eine Öffnung der Ausnehmung oder des Aufnahmevolumens freizugeben, durch die das Dielektrikum in die Ausnehmung oder das Aufnahmevolumen einbringbar und/oder aus dieser oder diesem entnehmbar ist.

Das Verschlussmittel kann insbesondere einen abnehmbaren beziehungsweise verschwenkbaren Deckel für die Ausnehmung beziehungsweise das Aufnahmevolumen bilden. Das Verschlussmittel kann insbesondere aus Metall bestehen beziehungsweise Metall enthalten, sodass es in der Schließstellung insbesondere als zusätzliche Abschirmung zwischen dem Dielektrikum und der Antenne beziehungsweise Bereichen, in denen starke durch den Betrieb der Antenne verursachte Felder auftreten, wirken kann.

In einer vorteilhaften Ausgestaltung der Vorrichtung kann das Dielektrikum zwischen der Leiterplatte und einer weiteren Leiterplatte angeordnet sein, wobei an wenigstens einer der Seiten des Dielektrikums ein jeweiliges Verbindungsmittel einerseits mit einer leitenden Fläche der Leiterplatte und andererseits mit einer leitenden Fläche der weiteren Leiterplatte verbunden ist. Vorzugsweise werden wenigstens zwei Verbindungsmittel genutzt, die an gegenüberliegenden Seiten des Dielektrikums angeordnet sind, sodass die Verbindungsmittel und die Leiterplatten das Dielektrikum insbesondere zumindest in einer Schnittebene vollständig umgreifen.

Das Verbindungsmittel kann insbesondere als Steckverbindung ausgeführt sein, sodass durch aufstecken der weiteren Leiterplatte auf die Leiterplatte über das wenigsten eine Verbindungsmittel eine zumindest teilweise Einhausung des Dielektrikums durch die leitenden Flächen der Leiterplatten und das wenigstens eine leitfähig Verbindungsmittel erreicht werden kann. Hierdurch kann mit geringem Aufwand eine gute Entkopplung zwischen dem Dielektrikum unter der Antenne erreicht werden.

Die Leiterplatte und die weitere Leiterplatte können im Wesentlichen parallel angeordnet sein. Beispielsweise kann ein Winkel zwischen der Leiterplatte der weiteren Leiterplatte um weniger als 30° oder weniger als 10° von einem parallelen Verlauf abweichen.

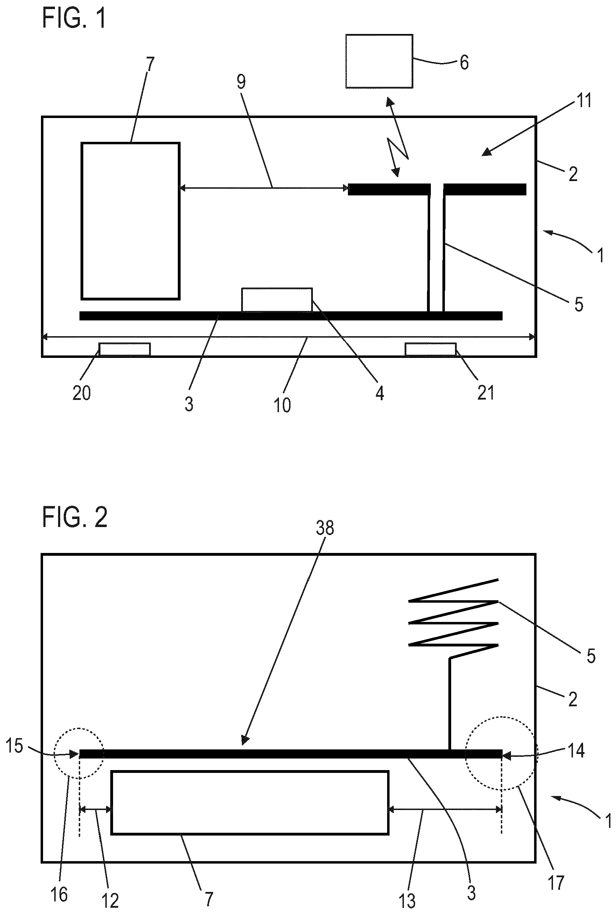

Weitere Vorteile und Einzelheiten der Erfindung ergeben sich aus den folgenden Ausführungsbeispielen sowie den zugehörigen Zeichnungen, wobei die Figuren 1 bis 8 schematisch verschiedene Ausführungsbeispiele **einer** Vorrichtung zeigen.

Fig. 1 zeigt eine Vorrichtung 1, die im Beispiel eine Messeinrichtung zur Erfassung einer Verbrauchsgröße ist und die eine Gehäuse 2, eine innerhalb des Gehäuses 2 angeordnete Leiterplatte 3, eine Kommunikationseinrichtung 4 und eine an der Leiterplatte 3 angeordnete Antenne 5 umfasst. Die Kommunikationseinrichtung ist im Beispiel dazu eingerichtet, über die Antenne 5 mit einer vorgegebenen Trägerfrequenz Daten an die externe Einrichtung 6 zu übertragen und optional auch von dieser zu empfangen. Beispielsweise können im Messerdaten an eine Ausleseeinrichtung oder eine zentrale Sammelstelle übertragen werden.

Die Kommunikationseinrichtung 4 ist zudem zu Erfassung von Messerdaten über die Komponenten 20, 21, beispielsweise über Ultraschallwandler zur Erfassung eines Durchflusses durch eine nicht gezeigt Rohrleitung, eingerichtet. Ein auf Basis dieser Messerdaten ermittelter Verbrauch kann kontinuierlich oder zu bestimmten Zeiten drahtlos an die externe Einrichtung 6 übermittelt werden.

Um die in dem Gehäuse 2 angeordnete Elektronik, also insbesondere die Kommunikationseinrichtung 4, die Antenne 5 und/oder die Komponenten 20, 21, vor Feuchtigkeit zu schützen, ist in dem Gehäuse zusätzlich eine Trocknungsmittel, beispielsweise eine Silicagel, angeordnet, das ein Dielektrikum 7 bildet, das eine aufgrund der Wasseraufnahme veränderliche Permittivität aufweist. Die Nutzung des Trocknungsmittels als derartiges Dielektrikum 7 wird hierbei nur als besonders relevantes Beispiel herangezogen. Die weiteren Ausführungen bezüglich der Anordnung beziehungsweise Abschirmung des Dielektrikums 7 in den verschiedenen diskutierten Beispielen können auch auf andere Dielektrika mit veränderlicher Permittivität übertragen werden.

Das Dielektrikum 7 kann unmittelbar an der Leiterplatte 3 angeordnet sein oder über ein nicht gezeigtes Haltemittel mit der Leiterplatte 3 verbunden sein. Alternativ wäre es beispielsweise möglich, das Dielektrikum 7 am Gehäuse 2 zu haltern.

Wie bereits im allgemeinen Teil der Beschreibung erläutert wurde, könnte die veränderliche Permittivität dann, wenn das Dielektrikum 7 stark mit dem durch die Antenne 5 verursachten elektromagnetischen Feld wechselwirken würde beziehungsweise sich im Nahfeld der Antenne 5 befinden würde, auch zu einer Veränderung der Eigenschaften der Antenne 5 selbst, insbesondere von deren Resonanzfrequenz, führen, sodass mit zunehmender Wasseraufnahme durch das Trocknungsmittel eine zunehmende Verstimmung der Antenne 5 und somit eine geringere Kommunikationsreichweite beziehungsweise ein höherer Energiebedarf des Sendebetriebs resultieren würde.

Um diese Problematik zu vermeiden oder zumindest zu verringern, wird in dem in Fig. 1 gezeigten nicht erfindunsgemäßen Ausführungsbeispiel eine besonders einfache Lösung genutzt, bei der der Abstand 9 zwischen dem Dielektrikum 7 und der Antenne 5 im Rahmen der durch die Gehäuseabmessungen des Gehäuses 7 gegebenen Bauraumbegrenzung möglichst groß gewählt wird. Der Abstand 9 sollte daher wenigstens 30 % des maximalen Durchmessers 10 des Innenraums 11 des Gehäuses 2 betragen. Vorzugsweise werden noch größere Abstände genutzt und es wird, wie noch mit Bezug auf die folgenden Figuren erläutert werden wird, die Leiterplatte 3 oder ein zusätzliches Schirmmittel 8 genutzt, um die Wechselwirkung zwischen Dielektrikum 7 und Antenne 5 weiter zu reduzieren.

Die Figuren 2 bis 8 zeigen weitere Ausgestaltungen der Vorrichtung 1, bei denen die Leiterplatte 3 und/oder ein Schirmmittel 8 zur Entkopplung der Antenne 5 von dem Dielektrikum 7 genutzt werden. Zur deutlicheren Hervorhebung der zentralen Merkmale dieser Beispiele wird in den weiteren Figuren auf die explizite Darstellung der Kommunikationseinrichtung 4 und der Komponenten 20, 21 verzichtet.

Während in dem in Fig. 1 gezeigten Beispiel das Dielektrikum 7 an der gleichen Seite der Leiterplatte 3 angeordnet ist, die auch die Antenne 5 trägt, wird in der Vorrichtung 1 gemäß Fig. 2 eine andere Anordnung des Dielektrikums 7, nämlich eine Anordnung auf der von der Antenne 5 abgewandten Rückseite der Leiterplatte 3, genutzt. Dies führt dazu, dass die Leiterplatte 3 zwischen dem Dielektrikum 7 und der Antenne 5 angeordnet ist, womit wenigstens eine leitfähige Fläche 38 der Leiterplatte 3, die insbesondere auf einem definierten Potenzial liegt, ein durch die Antenne 5 abgestrahltes elektromagnetisches Wechselfeld von dem Dielektrikum 7 abschirmt. Hierdurch wird ein Einfluss der Permittivität des Dielektrikums 7 auf die Eigenschaften der Antenne 5 weitgehend ausgeschlossen oder zumindest deutlich reduziert.

Wie in Fig. 2 schematisch durch Kreise 16, 17 angedeutet ist, treten im Bereich von Kanten 14, 15 der Leiterplatte 3 typischerweise lokale Maxima des von der Antenne 5 abgestrahlten Feldes auf. Daher ist das Dielektrikum 7 derart angeordnet und dimensioniert, dass es von den Kanten 14, 15 hinreichender weit, beispielsweise wenigstens 5 mm weit, beabstandet ist.

Da in dem in Fig. 2 gezeigten Ausführungsbeispiel die Antenne 5 deutlich näher an der Kante 14. angeordnet ist als an der Kante 15, ist zu erwarten, dass an der Kante 14 auch höhere Feldstärken auftreten als an der Kante 15. Daher ist es vorteilhaft, wenn der Abstand 13 des Dielektrikums 7 von der Kante 14 größer gewählt ist als der Abstand 12 von der Kante 15.

Ein weiterer Unterschied zwischen den in Fig. 1 und 2 gezeigten Ausgestaltungen ist es, dass in Fig. 1 die Antenne 5 eine Dipolantenne ist, während in Fig. 2 und den noch folgenden Figuren beispielhaft eine Monopolantenne verwendet wird. Bezüglich einer Beabstandung der Antenne 5 von dem Dielektrikum 7 beziehungsweise einer Abschirmung von Antenne 5 und Dielektrikum 7 gegeneinander sind Monopolantennen und Dipolantennen jedoch im Wesentlichen austauschbar nutzbar. Wie bereits im allgemeinen Teil erläutert wurde, wirkt die Antenne 5 zwar je nachdem, ob es sich um eine Monopolantenne oder um eine Dipolantenne handelt, etwas unterschiedlich mit dem Potenzial der leitenden Fläche 38 der Leiterplatte 3 zusammen, eine abschirmende Wirkung resultierte jedoch in beiden Fällen.

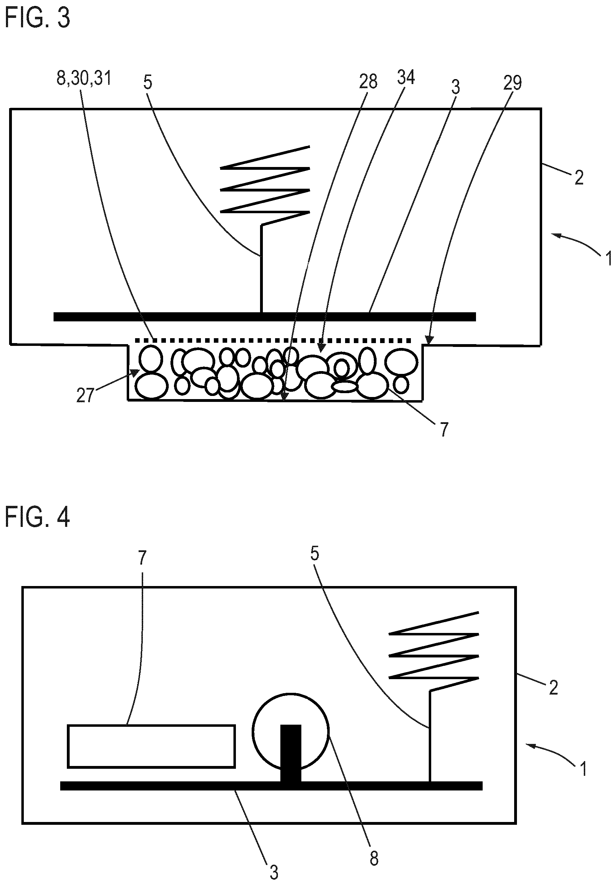

In der in Fig. 3 gezeigten nicht erfindunsgemäßen Vorrichtung 1 ist das Dielektrikum 7 in einer Ausnehmung 27 des Gehäuses 2 aufgenommen. Der Boden 28 der Ausnehmung 27 ist hierbei weiter von der Leiterplatte 3 beabstandet als der Rand 29 der Ausnehmung 27.

Die Ausnehmung 27 ist in der in Fig. 3 gezeigten Schließstellung 30 eines Verschlussmittels 31 durch dieses verschlossen. Das Verschlussmittel 31 kann beispielsweise durch ein Abheben von dem Gehäuse 2 in eine Offenstellung verbracht werden, wodurch ein einbringen beziehungsweise entfernen des Dielektrikums 7 ermöglicht wird. Das Verschlussmittel 31 kann ausschließlich dazu dienen, dass Dielektrikum 7 innerhalb der Ausnehmung 27 zu halten. Ein solches Zurückhalten des Dielektrikums 7 ist im gezeigten Ausführungsbeispiel besonders vorteilhaft, da das Dielektrikum 7 dort nicht als einzelner Festkörper, sondern als Granulat verwendet wird. Vorzugsweise bildet das Verschlussmittel 31 jedoch zugleich ein metallisches oder metallumfassendes Schirmmittel 8, das zwischen der Antenne 5 und dem Dielektrikum 7 angeordnet ist. Dies kann beispielsweise dadurch realisiert werden, dass als Verschlussmittel 31 ein Blech genutzt wird. Insbesondere kann ein perforiertes Blech genutzt werden, um eine Zuführung von Feuchtigkeit zu dem Trocknungsmittel zu erleichtern. Statt einem Blech könnten beispielsweise auch ein Drahtgeflecht, ein Matrixmaterial, das metallische Fäden und/oder Partikel umfasst und/oder ein metallbeschichtetes Trägermaterial verwendet werden.

Die Nutzung des Granulats als Dielektrikum 7 in Fig. 3 ist rein beispielhaft und das Dielektrikum 7 kann in den verschiedenen Ausführungsbeispielen wahlfrei als Granulat oder Festkörper genutzt werden. Insbesondere dann, wenn ein Granulat genutzt, ist es optional möglich, das Dielektrikum 7 in einem Beutel oder mehreren Beuteln aufzunehmen, um dessen Handhabung zu erleichtern. Wie bereits im allgemeinen Teil diskutiert wurde, kann ein solcher Beutel auch zur Abschirmung, insbesondere als das Schirmmittel 8 oder als die später noch erläuterte metallische oder metallumfassende Komponente 18, 19 dienen.

In dem in Fig. 4 dargestellten Ausführungsbeispiel sind das Dielektrikum 7 und die Antenne 5, ähnlich wie bereits in Fig. 1, an der gleichen Seite der Leiterplatte 3 angeordnet. Ein Einfluss des Dielektrikums 7 auf die Eigenschaften der Antenne 5 wird in diesem Beispiel besondere dadurch reduziert, dass zwischen diesen Komponenten ein Schirmmittel 8 angeordnet ist, dass im Beispiel durch eine elektrische Komponente der Vorrichtung 1, nämlich durch einen Energiespeicher, im konkreten Beispiel durch eine zylindrische Batterie, gebildet ist. Wie in diesem Beispiel gut erkennbar ist, können in der Vorrichtung 1 ohnehin genutzte Komponenten durch eine geeignete Anordnung zusätzlich dazu genutzt werden, den Einfluss der veränderlichen Permittivität des Dielektrikums 7 auf die Eigenschaften der Antenne 5 zu eliminieren oder zumindest zu reduzieren.

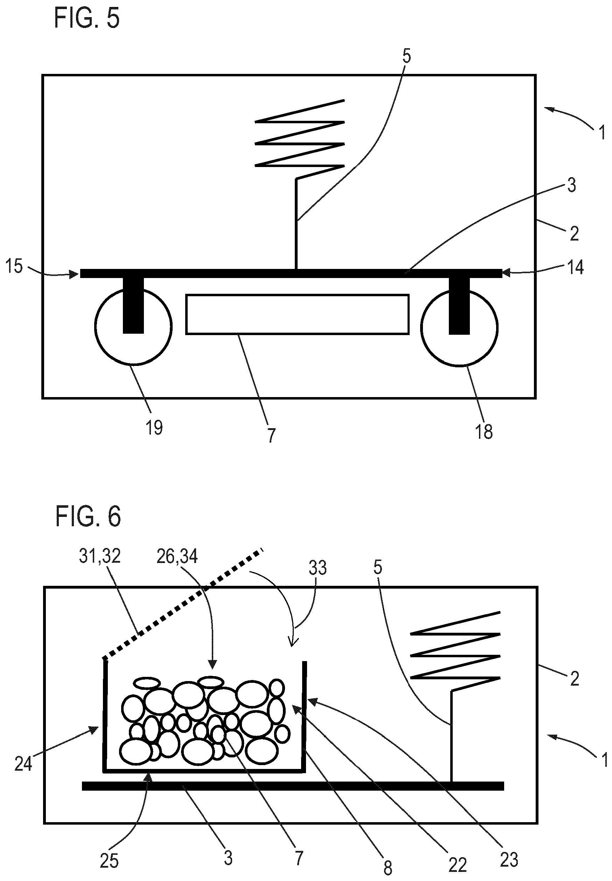

Auch in der in Fig. 5 gezeigten nicht erfindunsgemäßen Vorrichtung werden Energiespeicher genutzt, um eine Abschirmung des Dielektrikums 7 bezüglich der durch die Antenne 5 abgestrahlten Felder zu erreichen. In diesem Fall ist das Dielektrikum 7 jedoch, wie bereits in Fig. 2, an der Rückseite der Leiterplatte 3 angeordnet. Wie bereits erläutert wurde, kann es hierbei jedoch relevant sein, das Dielektrikum 7 hinreichend von den an den Kanten 14, 15 der Leiterplatte 3 auftretenden Feldern zu entkoppeln. Während dies in dem in Fig. 2 gezeigten Beispiel ausschließlich durch hinreichende Abstände 12, 13 des Dielektrikums 7 von den Kanten 14, 15 realisiert wurde, werden in Fig. 5 zusätzlich metallische oder metallumfassende Komponenten 18, 19, im Beispiel Batterien, zwischen der jeweiligen Kante 14, 15 und dem Dielektrikum 7 genutzt, um das Dielektrikum 7 gegen an den Kanten 14, 15 auftretende Felder abzuschirmen.

Die Figuren 6 bis 8 zeigen jeweils Vorrichtungen 1, bei denen das genutzte Dielektrikum 7 in einem Aufnahmevolumen 22 aufgenommen ist, das durch das Schirmmittel 8 zumindest teilweise umgriffen wird. Das Aufnahmevolumen 22 ist somit zumindest an Teilen seiner Seitenflächen 23-26 durch das Schirmmittel 8 begrenzt. Das Schirmmittel 8 kann hierbei auf verschiedene Weise gebildet werden, wie bereits mit Bezug auf Fig. 3 erläutert wurde.

In der in Fig. 6 gezeigten Vorrichtung 1 ist das Schirmmittel 8 kastenförmig ausgebildet und begrenzt das Aufnahmevolumen 22 somit an denen drei gezeigten Seitenflächen 23, 24, 25 sowie an nicht gezeigten Seitenflächen, die vor beziehungsweise hinter der Bildebene liegen. Die freibleibende Seitenfläche 26 bildet eine Öffnung 34, durch die das Dielektrikum 7 in der gezeigten Offenstellung 32 des Verschlussmittel 31 in das Aufnahmevolumen 22 eingebracht werden beziehungsweise aus diesem entnommen werden kann. Durch Verschwenken des Verschlussmittels 31, wie es durch den Pfeil 33 dargestellt ist, kann das Dielektrikum 7 vollständig eingehaust werden, wodurch ein Einfluss auf die Eigenschaften der Antenne 5 besonders gut unterdrückt werden kann.

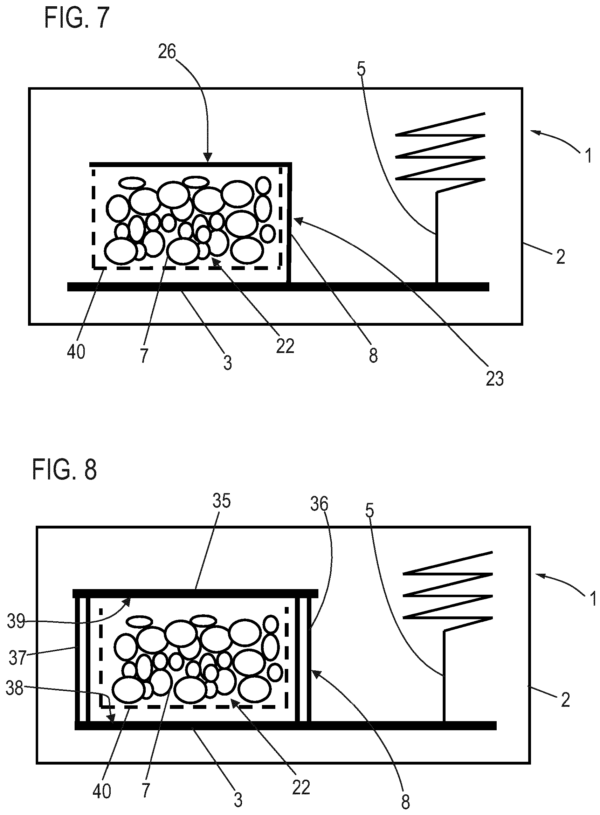

In der Vorrichtung 1 gemäß Fig. 7 wird ein demgegenüber einfacher aufgebautes, L-förmiges Schirmmittel 8 verwendet, das die Seitenflächen 23 und 26 des Aufnahmevolumens 22 begrenzt und ein Hindurchtreten von Feldern durch diese Seitenflächen 23, 26 im Wesentlichen vollständig unterdrückt. Zudem erfolgt seitens der Seitenfläche 25 eine Begrenzung beziehungsweise Abschirmung über die Leiterplatte 3 selbst. Dieses dreiseitige Umgreifen durch abschirmende Komponenten kann bereits ausreichend sein, um eine hinreichende Abschirmung der Antenne 5 gegenüber den veränderlichen Eigenschaften des Dielektrikums 7 zu erreichen.

Da im gezeigten Beispiel das Dielektrikum 7 als Granulat vorliegt, wird zusätzliche ein Aufnahmemittel 40, beispielsweise ein Korb, genutzt. Ein Wechsel des Dielektrikums 7, also im Beispiel des Trocknungsmittels, kann in diesem Fall beispielsweise dadurch erfolgen, dass der Korb entnommen wird, wonach das Trocknungsmittel im Korb ausgetauscht und der Korb mit dem neuen Trocknungsmittel wieder in das Aufnahmevolumen von 22 eingesetzt wird. Prinzipiell könnte das Aufnahmemittel 40 als zusätzliche Abschirmung dienen, es kann jedoch auch ausreichend sein, ein isolierendes Aufnahmemittel 40, beispielsweise aus Kunststoff, zu nutzen, da bereits eine Abschirmung durch das Schirmmittel 8 und die Leiterplatte 3 erfolgt.

Die in Fig. 8 gezeigte Vorrichtung 1 entspricht, abgesehen von der Ausgestaltung des Schirmmittel 8, im Wesentlichen der mit Bezug zu Fig. 7 diskutierten Vorrichtung 1. Das Schirmmittel 8 wird in Fig. 8 dadurch gebildet, dass eine weitere Leiterplatte 35 über an dieser vorgesehene Verbindungsmittel 36, 37, die insbesondere Steckkontakte bilden, mit der Leiterplatte 3 verbunden wird. Die Abschirmung des Dielektrikums 7 erfolgt in diesem Fall durch die leitfähigen Flächen 38, 39 der Leiterplatten 3, 35 und die leitfähigen Verbindungsmittel 36, 37.

### Bezugszeichenliste

- 1: Vorrichtung
- 2: Gehäuse
- 3: Leiterplatte
- 4: Kommunikationseinrichtung
- 5: Antenne
- 6: externe Einrichtung
- 7: Dielektrikum
- 8: Schirmmittel
- 9: Abstand
- 10: Durchmesser
- 11: Innenraum
- 12: Abstand
- 13: Abstand
- 14: Kante
- 15: Kante
- 16: Kreis
- 17: Kreis
- 18: Komponente
- 19: Komponente
- 20: Komponente
- 21: Komponente
- 22: Aufnahmevolumen
- 23: Seitenfläche
- 24: Seitenfläche
- 25: Seitenfläche
- 26: Seitenfläche
- 27: Ausnehmung
- 28: Boden
- 29: Rand
- 30: Schließstellung
- 31: Verschlussmittel
- 32: Offenstellung
- 33: Pfeil
- 34: Öffnung
- 35: Leiterplatte
- 36: Verbindungsmittel
- 37: Verbindungsmittel
- 38: Fläche
- 39: Fläche
- 40: Aufnahmemittel

## Patentansprüche

1. Vorrichtung, insbesondere Messeinrichtung zur Erfassung einer Verbrauchsgröße, mit einem Gehäuse (2), einer innerhalb des Gehäuses (2) angeordneten Leiterplatte (3), einer Kommunikationseinrichtung (4) und einer an oder auf der Leiterplatte (3) angeordneten Antenne (5), wobei die Kommunikationseinrichtung (4) dazu eingerichtet ist, über die Antenne (5) mit einer vorgegebenen Trägerfrequenz Daten zwischen der Vorrichtung (1) und einer externen Einrichtung (6) zu übertragen, wobei innerhalb des Gehäuses (2) ein Dielektrikum (7) mit einer veränderlichen Permittivität bezüglich der Trägerfrequenz angeordnet ist, **dadurch gekennzeichnet, dass** einerseits die Leiterplatte (3) und/oder ein metallisches oder metallumfassendes Schirmmittel (8) zwischen dem Dielektrikum (7) und der Antenne (5) angeordnet ist und dass andererseits der minimale Abstand (9) der Antenne (5) von dem Dielektrikum (7) wenigstens 30% oder wenigstens 50% des maximalen Durchmessers (10) des Innenraums (11) des Gehäuses (2) ist.

2. Vorrichtung nach Anspruch 1, **dadurch gekennzeichnet, dass** das Dielektrikum (7) ein Trocknungsmittel ist.

3. Vorrichtung nach Anspruch 1, **dadurch gekennzeichnet, dass** das Dielektrikum (7) derart ausgebildet ist, dass sich die Permittivität des Dielektrikums (7) bezüglich der Trägerfrequenz über ein vorgegebenes Betriebszeitintervall der Vorrichtung (1), insbesondere aufgrund einer Alterung des Dielektrikums (7), und/oder bis zu einer Sättigung des Dielektrikums (7) mit Wasser, insbesondere aufgrund einer Adsorption und/oder einer chemischen Bindung von Wasser, um wenigstens 50% ändert.

4. Vorrichtung nach einem der vorangehenden Ansprüche, **dadurch gekennzeichnet, dass** das Dielektrikum (7) wenigstens 2 mm oder wenigstens 10 mm von Kanten (14, 15) der Leiterplatte (3) entfernt angeordnet ist.

5. Vorrichtung nach einem der vorangehenden Ansprüche, **dadurch gekennzeichnet, dass** die Antenne (5) auf der Leiterplatte (3) zwischen einer ersten Kante (14) der Leiterplatte (3) und einer der ersten Kante (14) gegenüberliegenden zweiten Kante (15) der Leiterplatte (3) und näher an der ersten Kante (14) als an der zweiten Kante (15) angeordnet ist, wobei das Dielektrikum (7) näher an der zweiten Kante (15) als an der ersten Kante (14) angeordnet ist.

6. Vorrichtung nach einem der vorangehenden Ansprüche, **dadurch gekennzeichnet, dass** zwischen dem Dielektrikum (7) und wenigstens einer Kante (14, 15) der Leiterplatte (3) eine metallische oder metallumfassende Komponente (18, 19) der Vorrichtung (1) angeordnet ist.

7. Vorrichtung nach einem der vorangehenden Ansprüche, **dadurch gekennzeichnet, dass** das Schirmmittel (8) und/oder die metallische oder metallumfassende Komponente (18, 19) eine elektrische Komponente der Vorrichtung (1) ist.

8. Vorrichtung nach einem der vorangehenden Ansprüche, **dadurch gekennzeichnet, dass** das Schirmmittel (8) und/oder die metallische oder metallumfassende Komponente (18, 19) ein Energiespeicher ist, der zur Bereitstellung von Energie für die Kommunikationseinrichtung (4) und/oder für wenigstens eine zur Messdatenerfassung dienende Komponente (20, 21) dient.

9. Vorrichtung nach einem der vorangehenden Ansprüche, **dadurch gekennzeichnet, dass** das Schirmmittel (8) und/oder die metallische oder metallumfassende Komponente (18, 19) ein Drahtgeflecht und/oder ein, insbesondere perforiertes, Blech und/oder metallische Fäden und/oder Partikel in einem Matrixmaterial und/oder ein metallbeschichtetes Trägermaterial ist oder umfasst.

10. Vorrichtung nach einem der vorangehenden Ansprüche, **dadurch gekennzeichnet, dass** das Dielektrikum (7) innerhalb eines quaderförmigen Aufnahmevolumens (22) angeordnet ist, wobei das Schirmmittel (8) und/oder die Leiterplatte (3) und/oder die metallische oder metallumfassende Komponente (18, 19) das quaderförmige Aufnahmevolumen (22) an wenigstens zwei oder wenigstens drei oder wenigstens vier oder wenigstens fünf oder sechs seiner Seitenflächen (23-26) begrenzen.

11. Vorrichtung nach einem der vorangehenden Ansprüche, **dadurch gekennzeichnet, dass** das Gehäuse (2) eine Ausnehmung (27) aufweist, wobei ein durch eine Innenfläche des Gehäuses (2) gebildeter Boden (28) der Ausnehmung (27) weiter von der Leiterplatte (3) beabstandet ist als ein durch die Innenfläche des Gehäuses (2) gebildeter Rand (29) der Ausnehmung (27), wobei das Dielektrikum (7) in der Ausnehmung (27) aufgenommen ist.

12. Vorrichtung nach Anspruch 10 oder 11, **dadurch gekennzeichnet, dass** einerseits die Ausnehmung (27) oder andererseits eine weitere der Seitenflächen (23-26) des Aufnahmevolumens (22) in einer Schließstellung (30) eins Verschlussmittels (31) durch das Verschlussmittel (31) verschlossen ist, wobei das Verschlussmittel (31) bezüglich der Ausnehmung (27) oder des Aufnahmevolumens (22) aus der Schließstellung (31) in eine Offenstellung (32) bewegbar, insbesondere verschwenkbar, ist, um eine Öffnung (34) der Ausnehmung (27) oder des Aufnahmevolumens (22) freizugeben, durch die das Dielektrikum (7) in die Ausnehmung (27) oder das Aufnahmevolumen (22) einbringbar und/oder aus dieser oder diesem entnehmbar ist.

13. Vorrichtung nach einem der vorangehenden Ansprüche, **dadurch gekennzeichnet, dass** das Dielektrikum (7) zwischen der Leiterplatte (3) und einer weiteren Leiterplatte (35) angeordnet ist, wobei an wenigstens einer der Seiten des Dielektrikums (7) ein jeweiliges Verbindungsmittel (36, 37) einerseits mit einer leitenden Fläche (38) der Leiterplatte (3) und andererseits mit einer leitenden Fläche (39) der weiteren Leiterplatte (35) verbunden ist.

## Claims

1. Apparatus, in particular measuring device, for acquiring a consumption quantity, having a housing (2), a circuit board (3) arranged inside the housing (2), a communication device (4), and an antenna (5) arranged at or on the circuit board (3), wherein the communication device (4) is adapted to transmit data at a given carrier frequency between the apparatus (1) and an external device (6) via the antenna (5), wherein a dielectric (7) with changeable permittivity in respect of the carrier frequency is arranged inside the housing (2), **characterized in that** on the one hand the circuit board (3) and/or a metallic or metal-comprising shielding means (8) is arranged between the dielectric (7) and the antenna (5) and **in that** on the other hand the minimum distance (9) of the antenna (5) from the dielectric (7) is at least 30% or at least 50% of the maximum diameter (10) of the interior (11) of the housing (2).

2. Apparatus according to Claim 1, **characterized in that** the dielectric (7) is a drying agent.

3. Apparatus according to Claim 1, **characterized in that** the dielectric (7) is configured such that the permittivity of the dielectric (7) in respect of the carrier frequency changes by at least 50% over a given operating time period of the apparatus (1), in particular as a result of ageing of the dielectric (7), and/or until the dielectric (7) becomes saturated with water, in particular as a result of adsorption and/or chemical binding of water.

4. Apparatus according to one of the preceding claims, **characterized in that** the dielectric (7) is arranged at a distance of at least 2 mm or at least 10 mm from edges (14, 15) of the circuit board (3).

5. Apparatus according to one of the preceding claims, **characterized in that** the antenna (5) is arranged on the circuit board (3) between a first edge (14) of the circuit board (3) and a second edge (15) of the circuit board (3) opposite the first edge (14) and closer to the first edge (14) than to the second edge (15), wherein the dielectric (7) is arranged closer to the second edge (15) than to the first edge (14).

6. Apparatus according to one of the preceding claims, **characterized in that** a metallic or metal-comprising component (18, 19) of the apparatus (1) is arranged between the dielectric (7) and at least one edge (14, 15) of the circuit board (3).

7. Apparatus according to one of the preceding claims, **characterized in that** the shielding means (8) and/or the metallic or metal-comprising component (18, 19) is an electrical component of the apparatus (1).

8. Apparatus according to one of the preceding claims, **characterized in that** the shielding means (8) and/or the metallic or metal-comprising component (18, 19) is an energy store which serves to provide energy for the communication device (4) and/or for at least one component (20, 21) which serves to acquire measurement data.

9. Apparatus according to one of the preceding claims, **characterized in that** the shielding means (8) and/or the metallic or metal-comprising component (18, 19) is or comprises a wire mesh and/or a, in particular perforated, metal sheet and/or metallic threads and/or particles in a matrix material, and/or a metal-coated carrier material.

10. Apparatus according to one of the preceding claims, **characterized in that** the dielectric (7) is arranged inside a cuboidal holding volume (22), wherein the shielding means (8) and/or the circuit board (3) and/or the metallic or metal-comprising component (18, 19) delimit the cuboidal holding volume (22) on at least two or at least three or at least four or at least five or six of its side faces (23-26).

11. Apparatus according to one of the preceding claims, **characterized in that** the housing (2) has a recess (27), wherein a base (28) of the recess (27) formed by an inner surface of the housing (2) is spaced further apart from the circuit board (3) than is a rim (29) of the recess (27) formed by the inner surface of the housing (2), wherein the dielectric (7) is held in the recess (27).

12. Apparatus according to Claim 10 or 11, **characterized in that** on the one hand the recess (27) or on the other hand a further of the side faces (23-26) of the holding volume (22) is closed in a closed position (30) of a closing means (31) by the closing means (31), wherein the closing means (31) is movable, in particular pivotable, relative to the recess (27) or the holding volume (22) from the closed position (31) into an open position (32) in order to free an opening (34) of the recess (27) or of the holding volume (22), through which opening the dielectric (7) can be introduced into and/or removed from the recess (27) or the holding volume (22).

13. Apparatus according to one of the preceding claims, **characterized in that** the dielectric (7) is arranged between the circuit board (3) and a further circuit board (35), wherein on at least one of the sides of the dielectric (7) a respective connecting means (36, 37) is connected on the one hand to a conducting surface (38) of the circuit board (3) and on the other hand to a conducting surface (39) of the further circuit board (35).

## Revendications

1. Arrangement, en particulier dispositif de mesure destiné à acquérir une grandeur de consommation, comprenant un boîtier (2), une carte de circuit imprimé (3) disposée à l'intérieur du boîtier (2), un dispositif de communication (4) et une antenne (5) disposée au niveau de ou sur la carte de circuit imprimé (3), le dispositif de communication (4) étant conçu pour transmettre des données entre l'arrangement (1) et un dispositif externe (6) par l'intermédiaire de l'antenne (5) à une fréquence porteuse prédéfinie, un diélectrique (7) ayant une permittivité variable par rapport à la fréquence porteuse étant disposé à l'intérieur du boîtier (2), **caractérisé en ce que** d'une part, la carte de circuit imprimé (3) et/ou un moyen de blindage (8) métallique ou comprenant du métal est disposé entre le diélectrique (5) et l'antenne (7), et **en ce que**, d'autre part, la distance minimale (9) entre l'antenne (5) et le diélectrique (7) est d'au moins 30 % ou d'au moins 50 % du diamètre maximal (10) de l'espace intérieur (11) du boîtier (2).

2. Arrangement selon la revendication 1, **caractérisé en ce que** le diélectrique (7) est un dessiccant.

3. Arrangement selon la revendication 1, **caractérisé en ce que** le diélectrique (7) est configuré de telle sorte que la permittivité du diélectrique (7) par rapport à la fréquence porteuse varie d'au moins 50 % sur un intervalle de temps de fonctionnement prédéterminé de l'arrangement (1), en particulier en raison d'un vieillissement du diélectrique (7) et/ou jusqu'à une saturation du diélectrique (7) en eau, notamment en raison d'une l'adsorption et/ou d'une liaison chimique de l'eau.

4. Arrangement selon l'une des revendications précédentes, **caractérisé en ce que** le diélectrique (7) est disposé à une distance d'au moins 2 mm ou d'au moins 10 mm des bords (14, 15) de la carte de circuit imprimé (3).

5. Arrangement selon l'une des revendications précédentes, **caractérisé en ce que** l'antenne (5) est disposée sur la carte de circuit imprimé (3) entre un premier bord (15) de la carte de circuit imprimé (3) et un deuxième bord (14) de la carte de circuit imprimé (3) opposé au premier bord (14) et plus près du premier bord (14) que du deuxième bord (15), le diélectrique (7) étant disposé plus près du deuxième bord (15) que du premier bord (14).

6. Arrangement selon l'une des revendications précédentes, **caractérisé en ce qu'**un composant (18, 19) métallique ou comprenant du métal de l'arrangement (1) est disposé entre le diélectrique (7) et au moins un bord (14, 15) de la carte de circuit imprimé (3).

7. Arrangement selon l'une des revendications précédentes, **caractérisé en ce que** le moyen de blindage (8) et/ou le composant (18, 19) métallique ou comprenant du métal est un composant électrique de l'arrangement (1).

8. Arrangement selon l'une des revendications précédentes, **caractérisé en ce que** le moyen de blindage (8) et/ou le composant (18, 19) métallique ou comprenant du métal est un accumulateur d'énergie qui sert à fournir de l'énergie pour le dispositif de communication (4) et/ou pour au moins un composant (20, 21) servant à l'acquisition de données de mesure.

9. Arrangement selon l'une des revendications précédentes, **caractérisé en ce que** le moyen de blindage (8) et/ou le composant (18, 19) métallique ou comprenant du métal est ou comprend un treillis métallique et/ou une tôle métallique, en particulier perforée, et/ou des filaments et/ou des particules métalliques dans un matériau matriciel et/ou un matériau porteur revêtu de métal.

10. Arrangement selon l'une des revendications précédentes, **caractérisé en ce que** le diélectrique (7) est disposé à l'intérieur d'un volume d'accueil parallélépipédique (22), le moyen de blindage (8) et/ou la carte de circuit imprimé (3) et/ou le composant (18, 19) métallique ou comprenant du métal délimitant le volume d'accueil (22) parallélépipédique sur au moins deux ou au moins trois ou au moins quatre ou au moins cinq ou six de ses faces latérales (23-26).

11. Arrangement selon l'une des revendications précédentes, **caractérisé en ce que** le boîtier (2) possède un évidement (27), un fond (28) de l'évidement (27) formé par une surface intérieure du boîtier (3) étant plus éloigné de la carte de circuit imprimé (2) qu'un bord (29) de l'évidement (27) formé par la surface intérieure du boîtier (7), le diélectrique (2) étant reçu dans l'évidement (27).

12. Arrangement selon la revendication 10 ou 11, **caractérisé en ce que**, dans une position de fermeture (30) d'un moyen de fermeture (31), d'une part l'évidement (27) ou, d'autre part, une autre des surfaces latérales (23-26) du volume d'accueil (22) est fermé par le moyen de fermeture (31), le moyen de fermeture (31) pouvant être déplacé, en particulier pivoté, de la position de fermeture (31) à une position ouverte (32) par rapport à l'évidement (27) ou au volume d'accueil (22) afin d'ouvrir une ouverture (34) de l'évidement (27) ou du volume d'accueil (22) à travers laquelle le diélectrique (7) peut être introduit dans l'évidement (27) ou le volume d'accueil (22) et/ou être retiré de celui-ci.

13. Arrangement selon l'une des revendications précédentes, **caractérisé en ce que** le diélectrique (7) est disposé entre la carte de circuit imprimé (3) et une carte de circuit imprimé supplémentaire (35), un moyen de liaison (36, 37) respectif sur au moins l'un des côtés du diélectrique (7) étant connecté d'une part à une surface conductrice (38) de la carte de circuit imprimé (3) et d'autre part à une surface conductrice (39) de la carte de circuit imprimé supplémentaire (35).
